(19)

Europäisches Patentamt
European Patent Office
Office européen des brevets

(11) **EP 4 131 871 A1**

(12) **EUROPEAN PATENT APPLICATION**
published in accordance with Art. 153(4) EPC

(43) Date of publication:
**08.02.2023 Bulletin 2023/06**

(21) Application number: **21776884.5**

(22) Date of filing: **23.03.2021**

(51) International Patent Classification (IPC):
**H04L 12/751** (2013.01)   **H04L 12/44** (1990.01)

(86) International application number:
**PCT/CN2021/082402**

(87) International publication number:
**WO 2021/190503 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020   CN 202010230987**

(71) Applicant: **Hangzhou Hikvision Digital
Technology Co., Ltd.
Hangzhou, Zhejiang 310051 (CN)**

(72) Inventors:
• **FU, Yanyun**
  **Hangzhou, Zhejiang 310051 (CN)**
• **ZHANG, Chao**
  **Hangzhou, Zhejiang 310051 (CN)**

(74) Representative: **BRP Renaud & Partner mbB
Rechtsanwälte Patentanwälte
Steuerberater
Königstraße 28
70173 Stuttgart (DE)**

(54) **METHOD AND APPARATUS FOR GENERATING NETWORK TOPOLOGY**

(57)   The present application discloses a method for generating a network topology, which determines multiple designated devices in a network, wherein the multiple designated devices are directly or indirectly connected through ports. The accessible devices corresponding to the ports of the designated devices among the multiple designated devices are determined, wherein any accessible device corresponding to a port of a designated device is directly or indirectly connected to the designated device through the port. A root node device among the multiple designated devices is determined according to the number of accessible devices corresponding to the ports of the designated device(s). The designated devices that are directly connected among the multiple designated devices are determined according to the accessible devices corresponding to the ports of the designated devices. The topology of the multiple designated devices in the network is generated according to the root node device and the designated devices that are directly connected among the multiple designated devices. Thus, the topology of multiple designated devices in the network is automatically generated according to the accessible devices corresponding to the ports of the multiple designated devices in the network, which is simple, efficient and accurate.

| | |
|---|---|
| determining multiple designated devices in a network | Step S101 |
| determining, among the multiple designated devices, accessible devices corresponding to the ports of the designated devices | Step S102 |
| determining a root node device among the multiple designated devices according to the number of accessible devices corresponding to the ports of the designated devices | Step S103 |
| determining, according to the accessible devices corresponding to the ports of the designated devices, designated devices that are directly connected, among the multiple designated devices | Step S104 |
| generating a topology of the multiple designated devices in the network according to the root node device and the designated devices that are directly connected among the multiple designated devices | Step S105 |

FIG. 2

## Description

The present application claims the priority to a Chinese patent application No. 202010230987.1, filed with the China National Intellectual Property Administration on March 27, 2020 and entitled "METHOD AND APPARATUS FOR GENERATING NETWORK TOPOLOGY", which is incorporated herein by reference in its entirety.

## TECHNICAL FIELD

The present application relates to the field of communication network technology, in particular to a method and apparatus for generating network topology.

## BACKGROUND

Network topology refers to the physical composition mode of nodes and lines formed by devices and transmission media in the network, which reflects the distribution and connection status of each device in the whole network.
In related technologies, network operation and maintenance personnel manually determine the network topology and manually draw a network topology diagram, which is inefficient.

## SUMMARY

In view of this, embodiments of the present application provide a method, apparatus, electronic device, computer-readable storage medium, and computer program product for generating a network topology, which can automatically generate the topology of multiple designated devices in a network, which is simple and efficient.
In an aspect, an embodiment of the present application provides a method for generating a network topology, includes: determining multiple designated devices in a network; wherein the designated devices are directly or indirectly connected through ports; determining, among the multiple designated devices, accessible devices corresponding to the ports of the designated devices, wherein any accessible device corresponding to a port of a designated device is directly or indirectly connected to the designated device through the port; determining a root node device among the multiple designated devices according to the number of accessible devices corresponding to the ports of a designated device(s); determining, according to the accessible devices corresponding to the ports of the designated devices, designated devices that are directly connected, among the multiple designated devices; generating a topology of the multiple designated devices in the network according to the root node device and the designated devices that are directly connected among the multiple designated devices.

In an aspect, an embodiment of the present application provides a method for determining a root node devices, including: determining multiple designated devices in a network; wherein the designated devices are directly or indirectly connected through ports; determining, among the multiple designated devices, accessible devices corresponding to the ports of the designated devices, wherein any accessible device corresponding to a port of a designated device is directly or indirectly connected to the designated device through the port; and determining a root node device among the multiple designated devices according to the number of accessible devices corresponding to the ports of a designated device(s).
In an aspect, an embodiment of the present application provides an apparatus for generating a network topology, comprises: a first determination module, configured for determining multiple designated devices in a network; wherein the designated devices are directly or indirectly connected through ports; a second determination module, configured for determining, among the multiple designated devices, accessible devices corresponding to the ports of the designated devices, wherein any accessible device corresponding to a port of a designated device is directly or indirectly connected to the designated device through the port; a third determination module, configured for determining a root node device among the multiple designated devices according to the number of accessible devices corresponding to the ports of a designated devices; a fourth determination module, configured for determining, according to the accessible devices corresponding to the ports of the designated devices, designated devices that are directly connected, among the multiple designated devices; and a generation module, configured for generating a topology of the multiple designated devices in the network according to the root node device and the designated devices that are directly connected among the multiple designated devices.
In an aspect, an embodiment of the present application provides an apparatus for determining a root node device, comprising: a fifth determination module, configured for determining multiple designated devices in a network; wherein the multiple designated devices are directly or indirectly connected through ports; a sixth determination module, configured for determining, among the multiple designated devices, accessible devices corresponding to the ports of the designated devices, wherein any accessible device corresponding to a port of a designated device is directly or indirectly connected to the designated device through the port; and a seventh determination module, configured for determining a root node device among the multiple designated devices according to the number of accessible devices corresponding to the ports of a designated devices.
In an aspect, an embodiment of the present application provides an electronic device, comprising: a memory and a processor; wherein the memory stores a computer program executable by the processor, which when executed by the processor, causes the processor to implement the method for generating a network topology as described above.

In an aspect, an embodiment of the present application provides an electronic device, comprising: a memory and a processor; wherein the memory stores a computer program executable by the processor, which when executed by the processor, causes the processor to implement the method for determining a root node device as described above.

In an aspect, an embodiment of the present application provides a non-transitory computer-readable storage medium, wherein a computer program is stored thereon, and when executed by a processor, causes the processor to implement the method for generating a network topology as described above.

In an aspect, an embodiment of the present application provides a non-transitory computer-readable storage medium, wherein a computer program is stored thereon, and when executed by a processor, causes the processor to implement the method for determining a root node device as described above.

In an aspect, an embodiment of the present application provides a computer program product, which implements the method for generating a network topology as described above when instructions in the computer program product are executed by a processor.

In an aspect, an embodiment of the present application provides a computer program product, which implements the method for determining a root node device as described above when instructions in the computer program product are executed by a processor.

In an aspect, an embodiment of the present application provides a computer program code, the computer program code is configured to be executed to execute the method for generating a network topology as described above.

In an aspect, an embodiment of the present application provides a computer program code, the computer program code is configured to be executed to execute the method for determining a root node device as described above.

Compared with the prior art, the embodiments of the present application automatically generate the topology of multiple designated devices in the network according to the accessible devices corresponding to the ports of the multiple designated devices in the network, which is simple, efficient and accurate.

## BRIEF DESCRIPTION OF DRAWINGS

In order to more clearly describe the technical solution of the embodiments of the present application and the prior art, drawings needed in the embodiments and the prior art will be briefly described below. Obviously, the drawings described below are for only some embodiments of the present application, one of ordinary skills in the art can also obtain other drawings based on the drawings illustrated herein without any creative efforts.

In order to more clearly describe the technical solution of the embodiments of the present application, drawings needed in the embodiments will be briefly described below. Obviously, the drawings described below are for only some embodiments of the present application, one of ordinary skills in the art can also obtain other drawings based on the drawings illustrated herein without any creative efforts.

FIG. 1 is a diagram of a tree network structure;

FIG. 2 is a schematic flowchart of the method for generating a network topology provided by an embodiment of the present application;

FIG. 3 is a schematic diagram of a message of accessible device information corresponding to a port of a designated device;

FIG. 4 is another diagram of a tree network structure;

FIG. 5a is a diagram of the network topology when the network is normal;

FIG. 5b is a diagram of the network topology when the network is abnormal;

FIG. 6 is a diagram of the network topology;

FIG. 7 is a schematic flowchart of the method for determining a root node device provided by an embodiment of the present application;

FIG. 8 is a structural diagram of the apparatus for generating a network topology provided by an embodiment of the present application;

FIG. 9 is a structural diagram of the apparatus for determining a root node device provided by an embodiment of the present application.

## DETAILED DESCRIPTION

In order to make objectives, technical solutions and advantages of the present application more apparent, the present application now will be described optionally with reference to the accompanying drawings and by way of examples. Obviously, the embodiments described herein are only some of the embodiments of the present application instead of all of them. All other embodiments obtained by those of ordinary skills in the art based on the embodiments herein without any creative efforts are within the scope of the present application.

The terms used in the embodiments of the present application are only for the purpose of describing specific embodiments and are not intended to limit the present application. The singular forms "one", "said" and "this" used in the embodiments of the present application and the appended claims are also intended to comprise most forms, unless the context clearly indicates other meanings.

It should be understood that the term "and/or" used in the present application is only the same field describing the associated object, indicating that there can be three relationships, for example, A and/or B can indicate that there are three cases: A alone exists, A and B exist at the same time, and B alone exists. In addition, the character "/" in the present application generally indicates that the related objects are an "or" relationship.

It should be understood that although the terms first, second, third, etc. may be used to describe the preset range and the like in the embodiments of the present application, these preset ranges should not be limited to these terms. These terms are only used to distinguish the preset ranges from each other. For example, without departing from the scope of the embodiments of the present application, the first preset range may also be referred to as the second preset range. Similarly, the second preset range may also be referred to as the first preset range.

Depending on the context, the word "if" as used herein can be interpreted as "in case that" or "when" or "in response to determination" or "in response to detection". Similarly, depending on the context, the phrases "if determined" or "if detected (stated condition or event)" can be interpreted as "when determined" or "in response to determined" or "when detected (stated condition or event)" or "in response to detected (stated condition or event)".

Based on the above description, it can be known that in the related art, the network operation and maintenance personnel manually determine the network topology and manually draw the network topology diagram, which is not only inefficient, but also has a high possibility of errors.

In order to solve the above problems, embodiments of the present application provides a method for generating a network topology.

In order to facilitate the description of the method for generating the network topology provided by the embodiments of the present application, the related arts are first described.

Network topology refers to the physical layout of various devices interconnected by transmission media. In order to realize the interconnection, computers and other devices in the communication network need to be connected in a certain structural way, this connection method is called "topology". In general, it is how these network devices are connected together. At present, the common network topology mainly comprises bus type structure, ring-type structure, star-type structure, tree-type structure and mesh type structure, etc. Among them, the bus type structure uses a single communication line (bus) as a common transmission channel, and all nodes are directly connected to the bus through corresponding interfaces and conduct data transmission through the bus. In the ring-type structure, each device has the same status and is connected in order to form a closed ring. Data can be transmitted in one direction or two directions in the ring. The star-type structure has a central node device, and each other node device is connected to the central node device through a point-to-point link. The tree-type structure has a root node device, and other node devices in the network are directly or indirectly connected to the root node device. In the mesh structure, each device is connected to form a mesh type structure. There is no master node device, and there is no level.

Among them, the tree-type structure has the advantages of easy expansion, easy fault isolation and high reliability. The embodiments of the present application are mainly used for automatically generating a topology diagram of the network after automatically determining the root node in a tree-type network structure, and intuitively displaying the topology of the entire network, which is simple, efficient, and highly accurate.

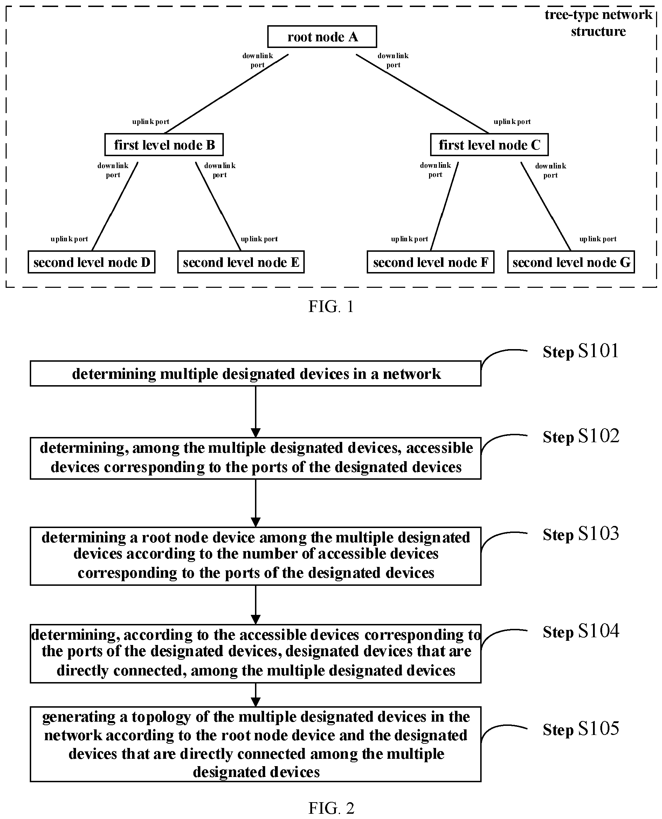

FIG. 1 is a diagram of a tree-type network structure. When a node device is located in the network, it can be regarded as a node of the network structure. As shown in FIG. 1, in the tree-type network structure, it comprises a root node device A. In the structure, a first level node device B and a first level node device C are directly connected to the root node device A, a second level node device D and a second level node device E are directly connected to the first level node device B and indirectly connected to the root node device A through the first level node device B, and a second level node device F and a second level node device G are directly connected to the first level node device C and are indirectly connected to the root node device A through the first level node device C, that is, the first level node device B, the first level node device C, the second level node device D, the second level node device E, the second level node device F, and the second level node device G are directly or indirectly connected to the root node device A.

In addition, for a node device, a port for data transmission with an upper level node device is an uplink port of the node device, and a port for data transmission with a lower level node device is a downlink port of the node device. For example, the port for data transmission between the root node device A and the first level node device B, the first level node device C is the downlink port of the root node device A, and the port for data transmission between the first level node device B and the root node device A is the uplink port of the first level node device B. Accessible devices of the uplink port comprise the root node device, and the accessible devices of the downlink port do not comprise the root node device.

The following describes the embodiments of the present application:
The execution subject of the embodiments of the present application may be any electronic device, which may be a device inside the network or a device outside the network, and the electronic device may interact with the user.

In the process of generating the tree-type network structure, the root node devices in the network can be determined first, and then the network topology can be generated in combined with the connection relationship between the devices in the network.

For example, applying the embodiments of the present application, the topology can be generated for an existing real network, or the network topology can be generated according to the actual requirement when no real network exists. For example, in a case, new devices are continuously added to the existing real network, making the network structure more and more complex. In this case, the embodiments of the present application can be applied to generate the topology of the network, so as to facilitate the maintenance of the network by relevant personnel. For another example, in another case, there is no real network, but a real network needs to be built according to the actual needs. In the case that each device existing in the network to be built and the connection relationship between each device needs to be built is known, the embodiments of the present application can be applied to generate the network topology to facilitate the relevant personnel to build the network according to the generated network topology.

FIG. 2 is a flow diagram of the method for generating a network topology provided by an embodiment of the present application. As shown in FIG. 2, the method includes:

Step S101: determining multiple designated devices in a network.

wherein the multiple designated devices are connected directly or indirectly through ports.

The designated device in the embodiment of the present application may be a manually selected device. For example, in the process of network operation and maintenance, sometimes it is necessary to generate the network topology of all devices in the network, and sometimes it is necessary to only generate the network topology of some of devices in the network. Based on this, the embodiments of the present application allow the network operation and maintenance personnel to select all or some of the devices as the designated devices according to the actual requirements, and then generate the network topology of multiple designated devices. Or, the designated devices may be randomly selected, or the designated devices may be selected according to the identification of the devices. The specific manner of selecting the designated devices is not limited.

Step S102: determining, among the multiple designated devices, accessible devices corresponding to the ports of the designated devices.

Any accessible device corresponding to a port of a designated device is directly or indirectly connected to the designated device through the port.

An accessible device corresponding to a port of the designated devices in the embodiment of the present application belongs to one of the multiple designated devices. That is, for an accessible device corresponding to the port that does not belong to the designated devices, it is irrelevant to generate a network topology of multiple designated devices.

Based on the above description, it can be known that the communication between devices in the network requires data transmission through the ports of the devices. That is, the connection between the devices is based on the connection between the ports of the devices, so an accessible device of the designated devices corresponds to a port of the designated devices. That is, in the present application, all accessible devices of the designated devices are respectively corresponding to the ports of the designated devices, so that the accessible devices of the designated devices are grouped according to different ports.

In some cases, the information of accessible devices corresponding to ports of the designated devices may be stored in the designated devices and may be stored in the form of a list of accessible devices.

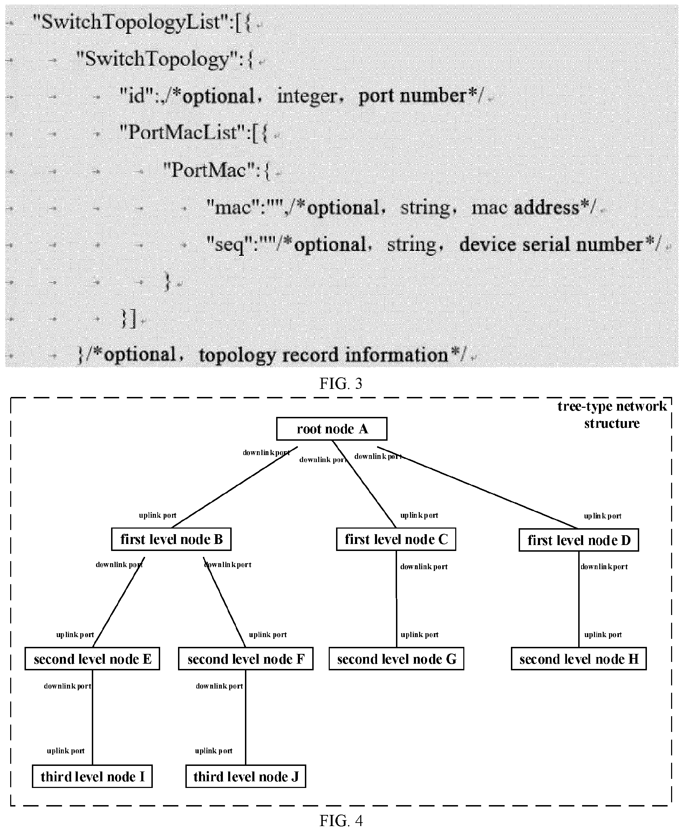

For example, the information of the accessible devices corresponding to the ports of the designated devices can be obtained through packet. FIG. 3 is a schematic diagram of the packet of the accessible device information corresponding to the port of the designated device. As shown in FIG. 3, the packet can be sent through protocol concurrency, and the accessible device information corresponding to the port of each designated device can be obtained according to the packet, wherein the packet format is j son format. SwitchTopologyList indicates the list related to the network structure of the designated device. SwitchTopology stores the network structure information of the designated device, id is the port number of the designated device. Integer is the integer number. PortMacList stores the accessible device list of the port. Each PortMac corresponds to one accessible device. The accessible device information includes the MAC address and the device serial number (seq: short for sequence) of the accessible device. String is the string-type.

Step S 103: determining a root node device among the multiple designated devices according to the number of accessible devices corresponding to the ports of a designated device(s).

Based on the above description, it can be known that in a tree-type network, other node devices in the network are directly or indirectly connected to a port of the root node device. That is, the root node device is the core node of the entire tree-type network. Other node devices take the root node device as the core and extend outward. The root node device among the multiple designated devices can be first determined.

As described above, in one case, the network topology can be generated without an existing real network. In this case, the root node device in the generated network topology can be located at the center of the network topology, which can make the generated network topology more symmetrical and beautiful.

As described above, in another case, the network topology can be generated with an existing real network. In this case, on the one hand, the distribution of root node device in the existing real network is generally balanced, so the probability that a device located in the center of the network is the root node device is large; on the other hand, in order to make the topology generated based on the real network more symmetrical and beautiful, the root node device should be located at the center of the topology as much as possible; From these, it can be seen that the device closer to the center of the network is more likely to be the root node device, so the root node device can be determined based on this.

In an embodiment, the root node device can be selected according to the number of accessible devices corresponding to the ports of the designated devices, that is, step S 103 may include: calculating, for any designated device of the designated devices, a mean square deviation of the number of accessible devices corresponding to all the ports of the designated device for connecting the accessible devices; and determining the root node device among the multiple designated devices according to the mean square deviation(s) corresponding to the designated device(s).

It can be understood that the value of the mean square deviation can reflect the degree of dispersion of a data set. Therefore, the smaller the value of the mean square deviation of the number of all accessible devices corresponding to ports used to connect to accessible devices of a designated device, the more balanced the number of accessible devices corresponding to different ports of the designated device. That is, the closer the designated device is to the center of the network, the greater the probability that the designated device is a root node device.

In some cases, since a designated device with only one port connected to an accessible device cannot be used as a root node device in general, it is not necessary to calculate the corresponding mean square deviation. Therefore, it is possible to calculate the mean square deviation corresponding to the designated devices with the number of ports connected to the accessible devices is not 1 among the multiple designated devices, and determine the root node device among the multiple designated devices according to the calculated value of the mean square deviation corresponding to the designated devices.

Based on this, the embodiments of the present application provide two specific methods for determining a root node device:

The first possible implementation is that, in the designated devices whose number of ports for connecting the accessible devices being not 1, taking a designated device with a smallest mean square deviation as the root node device among the multiple designated devices. In one implementation, since the minimum value of the mean square deviation is zero, the designated device with the mean square deviation value of zero can be directly determined as the root node device when the mean square deviation value calculated for designated devices with the number of ports connected to the accessible device not being 1 is zero, and there is no need to continue the subsequent calculation for other designated devices. In another implementation, the value of the corresponding mean square deviation is calculated for each designated device with the number of ports used to connect to accessible devices not being 1, and a designated device with the smallest mean square deviation is used as the root node device among the multiple designated devices according to the value of the mean square deviation corresponding to each designated device.

For example, the number of accessible devices corresponding to the N ports of the designated device can be recorded as $t_1... t_n... t_N$, and t is the average number of accessible devices corresponding to the N ports, that is,

$$t = \frac{1}{N}\sum_{n=1}^{N} t_n$$

and dt is the mean square deviation of the number of accessible devices corresponding to N ports, i.e.,

$$d_t = \sqrt{\frac{1}{N}[(t_1 - t)^2 + \cdots + (t_N - t)^2]}.$$

The network topology shown in FIG. 1 is used to describe. In FIG. 1, the node device A comprises two ports used to connect to accessible devices, wherein the number of accessible devices corresponding to one port is 3, the number of accessible devices corresponding to the other port is 3, and the value of the corresponding mean square deviation is 0. Similarly, the value of the mean square deviation corresponding to node device B is $\sqrt{6}$, and the value of the mean square deviation corresponding to node device C is $\sqrt{6}$. Node device D, node device E, node device F, and node device G all have only one port, which cannot be used as the root node device and can be directly excluded. Therefore, the node device A is the root node device.

As described above, the probability that the root node device is located at the center of the network topology is large. In this implementation, a designated device with the smallest mean square deviation is taken as the root node device among the multiple designated devices, and the root node device can be determined more accurately.

The second possible implementation is to consider that in special cases, for example, the mean square deviations corresponding to multiple designated devices are all small, that is, there is no unique and smallest mean square deviation. The embodiments of the present application determine the root node device among the multiple designated devices according to the mean square deviations corresponding to the designated device and the port bandwidths of the designated devices. For example, among multiple designated devices that need to calculate the mean square deviations, some of designated devices whose corresponding mean square deviation and the calculated minimum mean square deviation difference are within the preset range are first determined, and then the root node device is determined from some of designated devices according to the port bandwidths. Generally speaking, a device with a higher level in the network has a larger port bandwidth. Therefore, the device with the largest port bandwidth can be selected as the root node device from the designated devices according to the port bandwidth.

Optionally, if the mean square deviations of the designated devices with the number of ports used to connect to the accessible devices not being 1 are the same, a designated device with the largest port bandwidth is selected as the root node device.

For example, FIG. 4 is another diagram of a tree-type network structure. As shown in FIG. 4, in the tree-type network structure of FIG. 4, the number of accessible devices corresponding to the first port of node device A is 5 (node device B, node device E, node device F, node device I and node device J), the number of accessible devices corresponding to the second port is 2 (node device C and node device G), and the number of accessible devices corresponding to the third port is 2 (node device D and node device H). The corresponding mean square deviation is $\sqrt{2}$ . The number of accessible devices corresponding to the first port of node device B is 2 (node device E and node device I), the number of accessible devices corresponding to the second port is 2 (node device F and node device J), and the number of accessible devices corresponding to the third port is 5 (node device A, node device C, node device G, node device D and node device H). The corresponding mean square deviation is $\sqrt{2}$ . The mean square deviations corresponding to node device A and node device B are the same, and the bandwidth of the port of node device A is larger than that of node device B. Therefore, node device A is determined to be the root node device.

In an implementation manner, the embodiments of the present application can generate a network topology that meets the use requirements of network operation and maintenance personnel, so the user can manually select a root node device among multiple designated devices.

Step S104: determining, according to the accessible devices corresponding to the ports of the designated devices, designated devices that are directly connected, among the multiple designated devices.

Based on the above description, it can be seen that in step S102, the accessible devices corresponding to the ports of the designated devices are determined among the multiple designated devices. Accessible devices refer to devices directly or indirectly connected to the designated devices, but the accessible devices are not differentiated to determine which accessible devices are directly connected to the designated device and which accessible devices are indirectly connected to the designated device. For generating the network topology, it is necessary to determine other designated devices directly connected to the ports of the designated devices from all accessible devices corresponding to the ports of the designated devices, and then determine the designated devices directly connected among the multiple designated devices.

The first possible implementation is to determine the designated devices directly connected among the multiple designated devices according to the accessible devices corresponding to the ports of the designated devices. Specifically, for any two of the multiple designated devices, the step of determining whether a first device and a second device are designated devices that are directly connected according to the accessible devices corresponding to a first port of the first device and the accessible devices corresponding to a second port of the second device is performed until all designated devices that are directly connected among the multiple designated devices are determined. Among them, the first device and the second device are the any two of the multiple designated devices, the first port is any port of the first device, and the second port is any port of the second device.

When the accessible devices corresponding to the first port of the first device include the second device, the accessible devices corresponding to the second port of the second device include the first device, and there is no intersection between the accessible devices corresponding to the first port of the first device and the accessible devices corresponding to the second port of the second device, it is determined that the first device and the second device are directly connected.

In one example, the first port is an uplink port of the first device, and the second port is a downlink port of the second device. In one case of this example, when the accessible devices corresponding to the uplink port of the first device comprise the second device, the accessible devices corresponding to the downlink port of the second device comprise the first device, and there is no intersection between the accessible devices corresponding to the uplink port of the first device and the accessible devices corresponding to the downlink port of the second device, it is determined that the first device and the second device are directly connected.

The network topology shown in FIG. 1 is still referred to. In FIG. 1, accessible devices corresponding to one port of node device A comprise node device B, node device D, and node device E, and accessible devices corresponding to one port of node device B comprise node device A, node device C, node device F, and node device G. The accessible devices corresponding to one port of node device A comprise node device B, the accessible devices corresponding to one port of node device B comprise node device A, and the accessible devices corresponding to the port of node device A do not intersect with the accessible devices corresponding to the port of node device B, thereby determining that node device A and node device B are directly connected.

The principle of the above implementation will be described in detail below. When the accessible devices corresponding to the first port of the first device comprise the second device, and the accessible devices corresponding to the second port of the second device comprise the first device, the first device and the second device are directly or indirectly connected.

Assuming that the first port of the first device and the second port of the second device are indirectly connected, and there is a third device between the first device and the second device, the accessible devices corresponding to the first port of the first device comprise the third device, and the accessible devices corresponding to the second port of the second device should also comprise a third device. That is, the accessible devices corresponding to the first port of the first device and the accessible devices corresponding to the second port of the second device both have a third device.

In other words, when the accessible devices corresponding to the first port of the first device comprise the second device, the accessible devices corresponding to the second port of the second device comprise the first device, and there is no intersection between the accessible devices corresponding to the first port of the first device and the accessible devices corresponding to the second port of the second device, it is determined that the first device and the second device are directly connected.

The second possible implementation is to determine types of the ports of the designated devices according to the accessible devices corresponding to the root node device among the multiple designated devices and the accessible devices corresponding to the ports of the designated devices. The types of the ports comprise uplink ports and downlink ports. The designated devices that are directly connected among the multiple designated devices are determined according to the types of the ports of the designated devices and the accessible devices corresponding to the ports of the designated devices.

For example, in a tree-type network, the types of ports are divided into uplink ports and downlink ports. The ports for data transmission with the upper level node devices are uplink ports, and the ports for data transmission with the lower level node devices are downlink ports. Each device in the tree-type network needs to transmit data with the root node device. Therefore, after determining the root node device and obtaining the accessible devices of the port of each device, the port of the accessible devices including the root node device can be used as the uplink port, and the port of the accessible devices that do not include the root node device can be used as the downlink port. In addition, the connection mode of two directly connected devices is that the uplink port of one device is connected with the downlink port of the other device.

The network topology shown in FIG. 1 is still used for description. In FIG. 1, after the device A is determined as the root node device, the node device B and the node device C can be determined as the first level node device, and the node device D, the node device e, the node device F and the node device G can be determined as the second level node devices. For the first level node device B, a port for data transmission with the root node device A is the uplink port, a port for data transmission with the second level node device D and the second level node device E is the downlink port, and the root node device A is directly connected with the uplink port of the node device B through the downlink port.

Therefore, in an implementation of the embodiments of the present application, after determining the root node device of multiple designated devices, the types of the ports of the designated devices can be determined based on the root node device, and the directly connected designated device among the multiple designated devices can be determined to reduce the workload of data processing.

For example, the types of the ports of the designated devices can be determined according to whether the accessible devices corresponding to the ports of the designated devices comprise the root node device, and the ports of the designated devices can be divided into uplink ports and downlink ports.

After the types of the ports are distinguished, the accessible devices corresponding to each uplink port and the accessible devices corresponding to each downlink port can be determined.

For any two of the multiple designated devices, the step of determining whether the first device and the second device are designated devices that are directly connected according to the accessible devices corresponding to the uplink port of the first device and the accessible devices corresponding to the downlink port of the second device is performed until all designated devices that are directly connected among the multiple designated devices are determined. Among them, the first device and the second device are any two of the multiple designated devices.

When the accessible devices corresponding to the uplink port of the first device include the second device, the accessible devices corresponding to the downlink port of the second device include the first device, and there is no intersection between the accessible devices corresponding to the uplink port of the first device and the accessible devices corresponding to the downlink port of the second device, it is determined that the first device and the second device are directly connected.

For ease of explanation, the network topology shown in FIG. 1 is still used for description. In FIG. 1, a list of accessible devices corresponding to downlink port of node device A includes node device B, node device D, and node device E, and a list of accessible devices corresponding to uplink port of node device B includes node device A, node device C, node device F, and node device G. A list of accessible devices corresponding to downlink port of node device A includes node device B, a list of accessible devices corresponding to uplink port of node device B includes node device A, and the list of accessible devices corresponding to downlink port of node device A does not intersect with the list of accessible devices corresponding to uplink port of node device B, it is determined that node device A and node device B are directly connected.

Compared with the above determination on whether any port of the first device and any port of the second device are directly connected, determining types of the ports of the designated devices first, and then determining whether the uplink port of the first device and the downlink port of the second device are directly connected can greatly reduce the number of judgments.

Step S105: generating a topology of the multiple designated devices in the network according to the root node devices and the designated devices that are directly connected among the multiple designated devices.

For example, levels corresponding to the multiple designated devices are determined according to the root node device and the designated devices that are directly connected among the multiple designated devices. A topology of multiple designated devices in the network is generated according to the levels corresponding to the multiple designated devices.

In one case, after determining the root node device of multiple designated devices, designated devices that are directly connected to the root node device can be determined as the first level node devices, and then designated devices directly connected to the first level node devices can be determined from the remaining designated devices as the second level node devices, and so on until the network topology is generated.

To sum up, the method for generating a network topology provided in the embodiments of the present application determines multiple designated devices in a network, wherein the multiple designated devices are directly or indirectly connected through ports. The accessible devices corresponding to the ports of the designated devices among the multiple designated devices are determined, wherein any accessible device corresponding to a port of a designated device is directly or indirectly connected to the designated device through the port. The root node device among the multiple designated devices is determined according to the number of accessible devices corresponding to the ports of the designated devices. The designated devices that are directly connected among the multiple designated devices are determined according to the accessible devices corresponding to the ports of the designated devices. The topology of the multiple designated devices in the network is generated according to the root node device and the designated devices that are directly connected among the multiple designated devices. Thereby, the topology of the multiple designated devices in the network is automatically generated according to the accessible devices corresponding to the ports of the multiple designated devices in the network, which is simple, efficient, and highly accurate.

In addition, after the network topology is generated, the network topology diagram can be further generated to facilitate the network operation and maintenance personnel to intuitively understand the network topology.

In order to more clearly explain the role of the network topology diagram proposed in the embodiments of the present application in actual use, the following description will be given in combination with an example of network operation and maintenance.

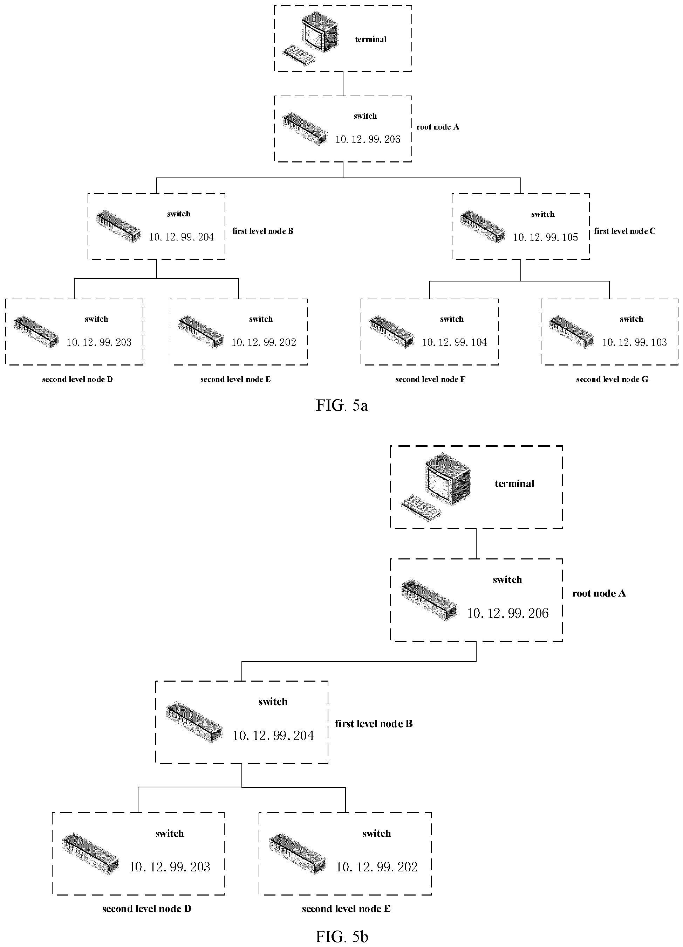

Figure 5a is a diagram of the network topology when the network is normal. Figure 5b is a diagram of the network topology when the network is abnormal. As shown in Figure 5a, when the network is normal, the network operation and maintenance personnel can automatically generate the network topology diagram through the client software on the terminal. When the network is abnormal, the generated network topology is shown in Figure 5b. The network operation and maintenance personnel can determine that the first level node device C is abnormal by comparing Figure 5a and Figure 5b, and then process the first level node device C.

The method for generating the network topology diagram is: setting a horizontal distance between adjacent designated devices of each of the levels and ordinates of respective designated devices in each of the levels; wherein abscissae of the respective designated devices in the same level are different, and the ordinates of the respective designated devices in the same level are the same;

for each of the levels in sequence, if this level is a first level, calculating an abscissa of the root node device in the first level as a candidate abscissa according to the number of designated devices in a next level of the first level and a horizontal distance between adjacent designated devices in the next level of the first level, wherein the first level is a level where the root node device is located;

if this level is not the first level and has a next level, calculating abscissae of respective designated devices in this level as candidate abscissae according to the number of designated devices in the next level of this level and a horizontal distance between adjacent designated devices in the next level of the level, and adjusting candidate abscissae of respective designated devices in a level above this level according to the candidate abscissae of the respective designated devices in this level; when this level is a penultimate level, after adjusting the candidate abscissae of respective designated devices in the level above this level, taking the candidate abscissae of respective designated devices in each of the levels other than a last level as target abscissae, wherein the last level is a level which does not have a next level;

if this level is the last level, determining target abscissae of respective designated devices in the last level according to a horizontal distance between adjacent devices in the last level;

generating the topology of the multiple designated devices in the network according to the target abscissae and ordinates of respective designated devices in respective levels.

In the method for generating the network topology described above, the abscissa of each level is dynamically adjusted from top to bottom. In order to distinguish the description, the abscissa in the adjustment process is called the candidate abscissa, and the abscissa after the final adjustment is called the target abscissa.

For example, horizontal distances between adjacent designated devices in different levels may be the same or different, and differences between the ordinates of designated devices in different levels may be the same or different.

For example, the node devices in the network can be classified into levels. The level of node device A is 1, the level of node device B and C is 2, and the level of node device D, E, F and G is 3. The height difference between two adjacent levels is H, and the distance between two adjacent nodes is W. Then the ordinate of node device A is H, the ordinate of node devices B and C is 2H, and the ordinate of nodes D, E, F and G is 3H.

Generally speaking, the abscissa of the root node device is firstly set as 0, and the translation distance $X_m$ of the abscissa of the root node device is calculated according to the number of child nodes of the root node devices, wherein $X_m$ = (number of child nodes - 1) $\times$ W/2. Then the abscissa of the root node device becomes $0+X_m$, the abscissa of the rightmost child node device among all the child node devices of the root node device is $2X_m$, and the distance between the two adjacent child node devices is W, so that the abscissae of the two child node devices of the root node device are determined to be 0 and W.

Similarly, for adjacent first level node devices and second level node devices, the level of the first level node devices is higher than that of the second level node devices. It is known that an abscissa of a first level node device is Xi. According to the number of child node devices of the first level node devices, the translation distance of the abscissa of the first level node device is calculated as $X_2$, $X_2$=(number of child nodes - 1) $\times$ W/2,

then the abscissa of the first level node device becomes $X_1+X_2$. At the same time, affected by the change of the abscissa of the node device, an abscissa of a node device with a higher level than the first level node device is shifted by $X_2$, for a node device on the right side of this node device in the first level of node devices, the abscissa is shifted by $2X_2$.

From top to bottom, all levels are traversed to generate a network topology.

Specifically, for node device A, the abscissa is first set as 0 and the ordinate as H. Since node device A has two child node devices B and C, the abscissa of node device A becomes w/2, the abscissa of node device C is W and the ordinate is 2H, the abscissa of node device B is 0 and the ordinate is 2H. Node device B has two child node devices D and E, then the abscissa of node device B becomes W/2, the abscissa of node device E becomes W and the ordinate is 3H, the abscissa of node device D is 0 and the ordinate is 3H, node device A is the parent node of node device B and abscissa thereof becomes W, and node device C is the peer node of node device B and the abscissa becomes 2W. Node device C has two child node devices F and G. The abscissa of node device G is 3W and the ordinate is 3H, the abscissa of node device F is 2W and the ordinate is 3H, the abscissa of node C becomes 5W/2, and the abscissa of node A becomes 3W/2. Thus, the network topology is obtained.

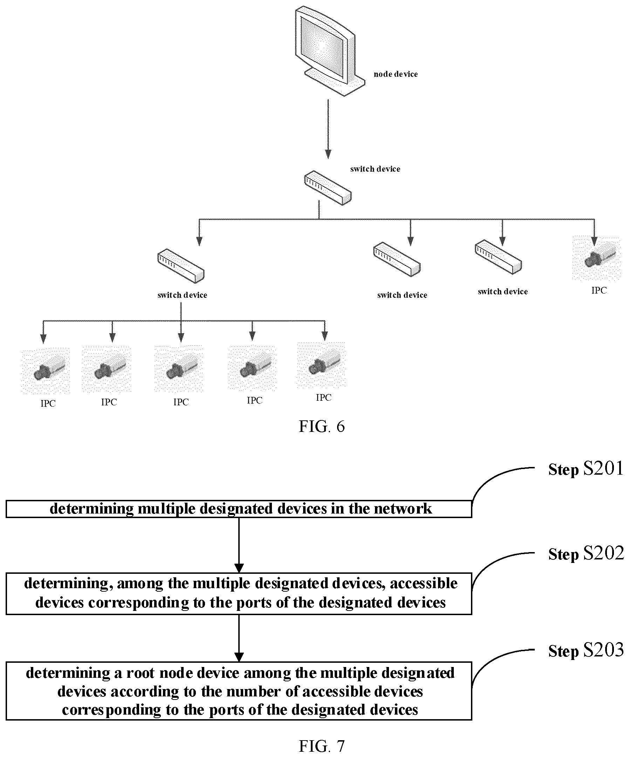

Figure 6 is a diagram of the network topology. As shown in Figure 6, the network in the embodiment of the present application may comprise various devices such as node devices, switch devices, IPC (IP camera).

In addition, it should be noted that the node devices in the network topology generated in the embodiments of the present application can be deployed and contracted for ease of use.

If it is necessary to contract one or some node devices in the network topology diagram, all the child node devices of the node devices can be hidden, and it can recalculate using the aforementioned coordinate calculation method. The hidden nodes do not participate in coordinate calculation and generate the contracted network topology.

If the node devices hidden in the network topology need to be deployed, the deployed nodes can be comprised in the aforementioned coordinate calculation formula for recalculation to generate the deployed network topology.

For example, after S105, if a network contraction instruction is received, a device to be hidden in the topology is determined; multiple designated devices in the network are re-determined based on the device to be hidden, wherein the designated devices do not include the device to be hidden; a contracted network topology is generated according to the levels corresponding to the re-determined multiple designated devices and the designated devices that are directly connected among the re-determined multiple designated devices.

Still taking FIG. 4 as an example, assuming that the user clicks the first level node B and wishes to hide the child nodes of the first level node B, it is determined that the devices to be hidden in the topology comprise the second level nodes E and F, and the third level nodes I and J. It is re-determined that the designated devices in the network include root node A, first level nodes B, C and D, and second level nodes G and H, and then the contracted network topology is regenerated based on the levels corresponding to these designated devices.

If a network deployment instruction is received later, the device to be deployed in the topology can be determined; multiple designated devices in the network are re-determined based on the device to be deployed, wherein the designated devices include the device to be deployed; and a deployed network topology is generated according to the levels corresponding to the re-determined multiple designated devices and the designated devices that are directly connected among the re-determined multiple designated devices.

Continuing with the above example, assumed that the user clicks the first level node B and desires to deploy the child nodes of the first level node B, it is determined that the devices to be deployed in the topology comprise the second level nodes E and F, and the third level nodes I and J. It is re-determined that the designated devices in the network include root node A, first level nodes B, C and D, and second level nodes E, F, G and H, third level nodes I and J, and then the deployed network topology is regenerated based on the levels corresponding to these designated devices.

Based on the foregoing description, it can be known that an embodiment of the present application also proposes a method for determining a root node device. Figure 7 is a schematic flow diagram of the method for determining a root node device in the present application. As shown in Figure 7, the method comprises:

> Step S201: determining multiple designated devices in the network,
> wherein the multiple designated devices are connected directly or indirectly through ports.
>
> Step S202: determining accessible devices corresponding to the ports of the designated devices among the multiple designated devices.

The accessible devices corresponding to the ports of the designated devices are directly or indirectly connected to the designated devices through the ports.

Step S203: determining a root node device among the multiple designated devices according to the number of accessible devices corresponding to the ports of the designated device(s).

The detailed descriptions of steps S201-S203 can refer to those of steps S101-S103.

To sum up, the method for determining a root node device provided in the embodiment of the present application determines multiple designated devices in a network, wherein the multiple designated devices are directly or indirectly connected through ports. The accessible devices corresponding to the ports of the designated devices among the multiple designated devices are determined, wherein any accessible device corresponding to a port of a designated device is directly or indirectly connected to the designated device through the port. The root node device among the multiple designated devices is determined according to the number of accessible devices corresponding to the ports of the designated device(s). Therefore, the root node device of the multiple designated devices in the network is automatically determined according to the number of accessible devices corresponding to the ports of the multiple designated devices in the network, which is simple, efficient, and highly accurate.

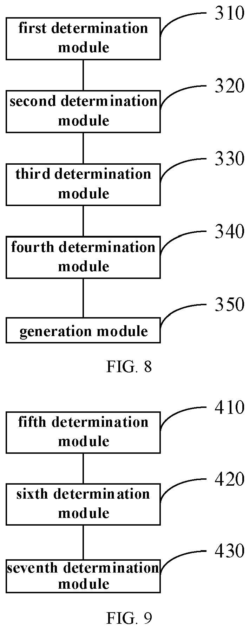

In order to realize the above embodiments, the embodiments of the present application further provide an apparatus for generating a network topology. Figure 8 is a structural diagram of the apparatus for generating a network topology provided by an embodiment of the present application. As shown in Figure 8, the apparatus includes a first determination module 310, a second determination module 320, a third determination module 330, a fourth determination module 340, and a generation module 350.

The first determination module 310 is configured to determine multiple designated devices in the network,
wherein the multiple designated devices are connected directly or indirectly through ports.

The second determination module 320 is configured to determining, among the multiple designated devices, accessible devices corresponding to the ports of the designated devices,
wherein any accessible device corresponding to a port of a designated device is directly or indirectly connected to the designated device through the port,

The third determination module 330 is configured to determine a root node device among the multiple designated devices according to the number of accessible devices corresponding to the ports of the designated device(s).

The fourth determination module 340 is configured to determining, according to the accessible devices corresponding to the ports of the designated devices, designated devices that are directly connected, among the multiple designated devices.

The generation module 350 is configured to generate a topology of the multiple designated devices in the network according to the root node device and the designated devices that are directly connected among the multiple designated devices.

Optionally, in order to be able to determine the root node device among the multiple designated devices, a possible implementation is that the third determination module 330 includes a first calculation sub module and a first determination sub module (not shown in the figure), wherein,

The first calculation sub module is configured to calculate, for any designated device of the designated devices, a mean square deviation of the number of accessible devices corresponding to all the ports of the designated device for connecting the accessible devices. The first determining sub module is configured to determine the root node device among the multiple designated devices according to the mean square deviations corresponding to the designated device(s).

Optionally, in order to be able to determine the root node device among the multiple designated devices, one possible implementation is that the first determination sub module is specifically configured for, in the designated devices whose number of ports for connecting the accessible devices being not 1, taking a designated device with a smallest mean square deviation as the root node device among the multiple designated devices, or, determining the root node device among the multiple designated devices according to the mean square deviation(s) corresponding to the designated device(s) and port bandwidth(s) of the designated device(s).

Optionally, in order to determine the directly connected designated device among multiple designated devices, a possible implementation is that the fourth determination module 340 includes a second determination sub module and a third determination sub module (not shown in the figure), wherein,

the second determination sub module is configured to determine types of the ports of the designated devices according to the root node device among the multiple designated devices and the accessible devices corresponding to the ports of the designated devices; wherein the types of the ports comprise uplink ports and downlink ports. The third determination sub module is configured to determine the designated devices that are directly connected among the multiple designated devices according to the types of the ports of the designated devices and the accessible devices corresponding to the ports of the designated devices.

Optionally, in order to determine the directly connected designated device among multiple designated devices, a possible implementation is that the third determination sub module comprises a determination unit and an execution unit (not shown in the figure), wherein,

the determination unit is configured to determine accessible devices corresponding to each uplink port and accessible devices corresponding to each downlink port, the execution unit is configured to, for any two of the multiple designated devices, perform an operation of determining whether the first device and the second device are designated devices that are directly connected according to the accessible devices corresponding to the uplink port of the first device and the accessible devices corresponding to the downlink port of the second device until all designated devices that are directly connected among the multiple designated devices are determined.

Among them, the first device and the second device are any two of the multiple designated devices.

Optionally, in order to determine that the first device and the second device are directly connected, one possible implementation is that the execution unit is specifically configured to, when the accessible devices corresponding to the uplink port of the first device include the second device, the accessible devices corresponding to the downlink port of the second device include the first device, and there is no intersection between the accessible devices corresponding to the uplink port of the first device and the accessible devices corresponding to the downlink port of the second device, determine that the first device and the second device are directly connected.

Optionally, in order to generate the topology of multiple designated devices, a possible implementation is that the generation module 350 includes a fourth determination sub module and a generation sub module (not shown in the figure), wherein,

the fourth determination sub module is configured to determine levels corresponding to the multiple designated devices according to the root node device and the designated devices that are directly connected among the designated device, the generation sub module is configured to generate the topology of multiple designated devices in the network according to the levels corresponding to the multiple designated devices.

Optionally, the fourth determination module 340 may be specifically configured to:

for any two of the multiple designated devices, the step of determining whether the first device and the second device are designated devices that are directly connected according to the accessible devices corresponding to the first port of the first device and the accessible devices corresponding to the second port of the second device is performed until all designated devices that are directly connected in the multiple designated devices are determined;

wherein, the first device and the second device are any two of the multiple designated devices, the first port is any port of the first device, and the second port is any port of the second device.

Optionally, the first port is an uplink port, the second port is a downlink port, accessible devices of the uplink port comprise the root node device, and accessible devices of the downlink port do not comprise the root node device.

Optionally, the fourth determination module 340 may be also configured to:

when the accessible devices corresponding to the uplink port of the first device include the second device, the accessible devices corresponding to the downlink port of the second device include the first device, and there is no intersection between the accessible devices corresponding to the uplink port of the first device and the accessible devices corresponding to the downlink port of the second device, it is determined that the first device and the second device are directly connected.

Optionally, the generation sub module is specifically configures for:

setting a horizontal distance between adjacent designated devices of each of the levels and ordinates of respective designated devices in each of the levels; wherein abscissae of the respective designated devices in the same level are different, and the ordinates of the respective designated devices in the same level are the same;

for each of the levels in sequence, if this level is a first level, calculating an abscissa of the root node device in the first level as a candidate abscissa according to the number of designated devices in a next level of the first level and a horizontal distance between adjacent designated devices in the next level of the first level, wherein the first level is a level where the root node device is located;

if this level is not the first level and has a next level, calculating abscissae of respective designated devices in this level as candidate abscissae according to the number of designated devices in the next level of this level and a horizontal distance between adjacent designated devices in the next level of the level, and adjusting candidate abscissae of respective designated devices in a level above this level according to the candidate abscissae of the respective designated devices in this level; when this level is a penultimate level, after adjusting the candidate abscissae of respective designated devices in the level above this level, taking the candidate abscissae of respective designated devices in each of the levels other than a last level as target abscissae, wherein the last level is a level which does not have a next level;

if this level is the last level, determining target abscissae of respective designated devices in the last level according to a horizontal distance between adjacent devices in the last level;

generating the topology of the multiple designated devices in the network according to the target abscissae and ordinates of respective designated devices in respective levels.

Optionally, the apparatus further includes an eighth determination module and a ninth determination module (not shown in the figure), wherein,

the eighth determination module is configured to determine a device to be hidden in the topology after receiving a network contraction instruction;

the ninth determination module is configured to re-determine multiple designated devices in the network based on the device to be hidden, wherein the designated devices do not comprise the device to be hidden; and return to trigger the generation module 350.

Optionally, the apparatus further includes a tenth determination module and an eleventh determination module (not shown in the figure), wherein,

the tenth determination module is configured to determine a device to be deployed in the topology after receiving a network deployment instruction;

the eleventh determination module is configured to re-determine multiple designated devices in the network based on the device to be deployed, wherein the designated devices include the device to be deployed; and return to trigger the generation module 350.

It should be noted that the foregoing explanation of the method for generating the network topology provided in the embodiments of the present application is also applicable to the apparatus for generating the network topology provided in the embodiments of the present application, and will not be repeated here.

To sum up, the apparatus for generating a network topology provided in the embodiments of the present application determines multiple designated devices in a network when generating network topology, wherein the multiple designated devices are directly or indirectly connected through ports. The accessible devices corresponding to the ports of the designated devices among the multiple designated devices are determined, wherein any accessible device corresponding to a port of a designated device is directly or indirectly connected to the designated device through the port. The root node device among the multiple designated devices is determined according to the number of accessible devices corresponding to the ports of the designated devices. The designated devices that are directly connected among the multiple designated devices are determined according to the accessible devices corresponding to the ports of the designated devices. The topology of the multiple designated devices in the network is generated according to the root node device and the designated devices that are directly connected among the multiple designated devices. Thereby, the topology of the multiple designated devices in the network is automatically generated according to the accessible devices corresponding to the ports of the multiple designated devices in the network, which is simple, efficient, and highly accurate.

In order to realize the above embodiments, an embodiment of the present application further provides an apparatus for determining a root node device. Figure 9 is a structural diagram of the apparatus for determining a root node device according to an embodiment of the present application. As shown in Figure 9, the apparatus includes a fifth determination module 410, a sixth determination module 420, and a seventh determination module 430.

The fifth determination module 410 is configured to determine multiple designated devices in the network,

wherein the multiple designated devices are connected directly or indirectly through ports.

The sixth determination module 420 is configured to determine, among the multiple designated devices, accessible devices corresponding to the ports of the designated devices,

wherein any accessible device corresponding to a port of a designated device is directly or indirectly connected to the designated device through the port,

The seventh determination module 430 is configured to determine a root node device among the multiple designated devices according to the number of accessible devices corresponding to the ports of the designated devices.

Optionally, the seventh determination module 430 includes a second calculation sub module and a fifth determination sub module (not shown in the figure), wherein,

the second calculation sub module is configured to calculate, for any designated device of the designated devices, a mean square deviation of the number of accessible devices corresponding to all the ports of the designated device for connecting the accessible devices;

the fifth determination sub module is configured to determine the root node device among the multiple designated devices according to the mean square deviation(s) corresponding to the designated device(s).

Optionally, the fifth determining sub module is specifically configured to:

in the designated devices whose number of ports for connecting the accessible devices being not 1, taking a designated device with a smallest mean square deviation as the root node device among the multiple designated devices, or

determining the root node device among the multiple designated devices according to the mean square deviation(s) corresponding to the designated device(s) and port bandwidth(s) of the designated device(s).

It should be noted that the foregoing explanation of the method for determining the root node device provided in the embodiments of the present application is also applicable to the apparatus for determining the root node device provided in the embodiments of the present application, and will not be repeated here.

To sum up, the apparatus for determining a root node device provided in the embodiments of the present application determines multiple designated devices in a network when the root node device is determined, wherein the multiple designated devices are directly or indirectly connected through ports. The accessible devices corresponding to the ports of the designated devices among the multiple designated devices are determined, wherein any accessible device corresponding to a port of a designated device is directly or indirectly connected to the designated device through the port. The root node device among the multiple designated devices is determined according to the number of accessible devices corresponding to the ports of the designated device(s). Therefore, the root node device of the multiple designated devices in the network is automatically determined according to the number of accessible devices corresponding to the ports of the multiple designated devices in the network, which is simple, efficient, and highly accurate.

In order to realize the above embodiments, the present application also proposes an electronic device, comprising a memory and a processor; wherein the memory stores a computer program executable by the processor, which when executed by the processor, causes the processor to implement the method for generating a network topology as described above.

In order to realize the above embodiments, the present application also proposes an electronic device, comprising a memory and a processor; wherein the memory stores a computer program executable by the processor, which when executed by the processor, causes the processor to implement the method for determining the root node device as described above.

In order to realize the above embodiments, a non-transitory computer-readable storage medium is provided, wherein a computer program is stored thereon, and when executed by a processor, causes the processor to implement the method for generating a network topology as described above.

In order to realize the above embodiments, a non-transitory computer-readable storage medium is provided, wherein a computer program is stored thereon, and when executed by a processor, causes the processor to implement the method for determining a root node device as described above.

In order to realize the above embodiments, a computer program product is provided, which implements the method for generating a network topology as described above when instructions in the computer program product are executed by a processor.

In order to realize the above embodiments, a computer program product is provided, which implements the method for determining a root node device as described above when instructions in the computer program product are executed by a processor.

In order to realize the above embodiments, a computer program code is provided, the computer program code is configured to be executed to execute the method for generating a network topology as described above.

In order to realize the above embodiments, a computer program code is provided, the computer program code is configured to be executed to execute the method for determining a root node device as described above.

Those skilled in the art can clearly understand that, for convenience and conciseness of description, the specific working process of the apparatus, electronic device, computer-readable storage medium and computer program product described above can refer to the corresponding process in the above method embodiments, and will not be described here.

In the embodiments provided by the present application, it should be understood that the disclosed apparatus, electronic device, computer-readable storage medium, computer program products and methods can be realized in other ways. The apparatus embodiments described above are merely illustrative. For example, the apparatus can be divided into units only according to the logical functions, however, in practice, the apparatus can be divided in other ways. For example, a plurality of units or components can be combined or integrated into another system, or some features can be ignored or not executed. Further, the direct coupling or communication connections between the interfaces, devices or units shown or described above can be indirect coupling or communication connections, or electrical or mechanical connections or other forms of connections.

The units illustrated as separate components may or may not be physically separated. The components shown as units may or may not be physical units, and can be located on one unit or can be distributed on a plurality of network units. Some or all of the units can be selected from the units above according to actual needs to achieve the objective of the solution of the embodiments.

In addition, all the functional units in the embodiments of the present application can be integrated in one processing unit, or each of the units can be an individual unit, or two or more units can be integrated in one unit. The integrated unit described above can be implemented as hardware or can be implemented as a hardware plus software function unit.

The integrated unit implemented in the form of software functional unit can be stored in a computer readable storage medium. The above software functional unit is stored in a storage medium, and comprises several instructions for causing a computer device (which may be a personal computer, a server, or a network apparatus) or a processor to execute some steps of the methods of the embodiments of the present application. The storage medium comprises medium capable of storing program code, such as a USB flash disk, a mobile hard disk, a Read Only Memory (ROM), a Random Access Memory (RAM), a magnetic disk, or an optical disk.

The description is only for preferred embodiments of the present application, and embodiments are not so limited. Any modifications, substitutions, improvements, etc., which are made within the spirit and principles of the present application, will fall into the protection scope of the present application.

## Claims

1. A method for generating a network topology, comprising:

   determining multiple designated devices in a network, wherein the multiple designated devices are directly or indirectly connected through ports;
   determining, among the multiple designated devices, accessible devices corresponding to the ports of the designated devices, wherein any accessible device corresponding to a port of a designated device is directly or indirectly connected to the designated device through the port;
   determining a root node device among the multiple designated devices according to the number of accessible devices corresponding to the ports of a designated device(s);
   determining, according to the accessible devices corresponding to the ports of the designated devices, designated devices that are directly connected, among the multiple designated devices;
   generating a topology of the multiple designated devices in the network according to the root node device and the designated devices that are directly connected among the multiple designated devices.

2. The method of claim 1, wherein determining the root node device among the multiple designated devices according to the number of accessible devices corresponding to the ports of the designated device(s), comprises:

   calculating, for any designated device of the designated devices, a mean square deviation of the numbers of accessible devices corresponding to all the ports of the designated device for connecting the accessible devices; and
   determining the root node device among the multiple designated devices according to the mean square deviation(s) corresponding to the designated device(s).

3. The method of claim 2, wherein determining the root node device among the multiple designated devices according to the mean square deviation corresponding to the designated device, comprises:

> in the designated devices whose number of ports for connecting the accessible devices being not 1, taking a designated device with a smallest mean square deviation as the root node device among the multiple designated devices, or
>
> determining the root node device among the multiple designated devices according to the mean square deviation(s) corresponding to the designated device(s) and port bandwidth(s) of the designated device(s).

4. The method of claim 1, wherein determining, according to the accessible devices corresponding to the ports of the designated devices, the designated devices that are directly connected among the multiple designated devices, comprises:

> determining types of the ports of the designated devices according to the root node device among the multiple designated devices and the accessible devices corresponding to the ports of the designated devices; wherein the types of the ports comprise uplink ports and downlink ports;
>
> determining the designated devices that are directly connected among the multiple designated devices according to the types of the ports of the designated devices and the accessible devices corresponding to the ports of the designated devices.

5. The method of claim 4, wherein determining the designated devices that are directly connected among the multiple designated devices according to the types of the ports of the designated devices and the accessible devices corresponding to the ports of the designated devices, comprises:

> determining accessible devices corresponding to each uplink port and accessible devices corresponding to each downlink port;
>
> for any two of the multiple designated devices, performing a step of determining whether a first device and a second device are designated devices directly connected according to the accessible devices corresponding to the uplink port of the first device and the accessible devices corresponding to the downlink port of the second device, until all the designated devices that are directly connected among the multiple designated devices are determined, wherein the first device and the second device are the any two of the multiple designated devices.

6. The method of claim 1, wherein determining the designated devices that are directly connected among the multiple designated devices according to the accessible devices corresponding to the ports of the designated devices, comprises:

> for any two of the multiple designated devices, performing a step of determining whether a first device and a second device are designated devices that are directly connected according to accessible devices corresponding to a first port of the first device and accessible devices corresponding to a second port of the second device, until all the designated devices that are directly connected among the multiple designated devices are determined;
>
> wherein, the first device and the second device are the any two of the multiple designated devices, the first port is any port of the first device, and the second port is any port of the second device.

7. The method of claim 6, wherein the first port is an uplink port, the second port is a downlink port, accessible devices of the uplink port comprise the root node device, and accessible devices of the downlink port do not comprise the root node device.

8. The method of claim 5 or 7, wherein determining whether the first device and the second device are the designated devices that are directly connected according to the accessible devices corresponding to the uplink port of the first device and the accessible devices corresponding to the downlink port of the second device, comprises:
   when the accessible devices corresponding to the uplink port of the first device comprise the second device, the accessible devices corresponding to the downlink port of the second device comprise the first device, and there is no intersection between the accessible devices corresponding to the uplink port of the first device and the accessible devices corresponding to the downlink port of the second device, determining that the first device and the second device are directly connected.

9. The method of any of claims 1-7, wherein generating the topology of the multiple designated devices in the network according to the root node device and the designated devices that are directly connected among the multiple designated devices, comprises:

> determining levels corresponding to the multiple designated devices according to the root node device and the designated devices that are directly connected among the multiple designated devices;
>
> generating the topology of the multiple designated devices in the network according to the levels corresponding to the multiple designated devices.

10. The method of claim 9, wherein generating the topology of the multiple designated devices in the network according to the levels corresponding to the multiple designated devices, comprises:

setting a horizontal distance between adjacent designated devices of each of the levels and ordinates of respective designated devices in each of the levels; wherein abscissae of the respective designated devices in the same level are different, and the ordinates of the respective designated devices in the same level are the same;

for each of the levels in sequence, if this level is a first level, calculating an abscissa of the root node device in the first level as a candidate abscissa according to the number of designated devices in a next level of the first level and a horizontal distance between adjacent designated devices in the next level of the first level, wherein the first level is a level where the root node device is located;

if this level is not the first level and has a next level, calculating abscissae of respective designated devices in this level as candidate abscissae according to the number of designated devices in the next level of this level and a horizontal distance between adjacent designated devices in the next level of the level, and adjusting candidate abscissae of respective designated devices in a level above this level according to the candidate abscissae of the respective designated devices in this level; when this level is a penultimate level, after adjusting the candidate abscissae of respective designated devices in the level above this level, taking the candidate abscissae of respective designated devices in each of the levels other than a last level as target abscissae, wherein the last level is a level which does not have a next level;

if this level is the last level, determining target abscissae of respective designated devices in the last level according to a horizontal distance between adjacent devices in the last level;

generating the topology of the multiple designated devices in the network according to the target abscissae and ordinates of respective designated devices in respective levels.

11. The method of claim 1, wherein after generating the topology of the multiple designated devices in the network according to the root node device and the designated devices that are directly connected among the multiple designated devices, the method further comprises:

determining a device to be hidden in the topology after receiving a network contraction instruction;

re-determining multiple designated devices in the network based on the device to be hidden, wherein the designated devices do not comprise the device to be hidden;

generating a contracted network topology according to levels corresponding to the re-determined multiple designated devices and designated devices that are directly connected among the re-determined multiple designated devices.

12. The method of claim 11, wherein after generating the contracted network topology, the method further comprises:

determining a device to be deployed in the topology after receiving a network deployment instruction;

re-determining multiple designated devices in the network based on the device to be deployed, wherein the designated devices comprise the device to be deployed;

generating a deployed network topology according to levels corresponding to the re-determined multiple designated devices and designated devices that are directly connected among the re-determined multiple designated devices.

13. A method for determining a root node device, comprising:

determining multiple designated devices in a network; wherein the multiple designated devices are directly or indirectly connected through ports;

determining, among the multiple designated devices, accessible devices corresponding to the ports of the designated devices, wherein any accessible device corresponding to a port of a designated device is directly or indirectly connected to the designated device through the port; and

determining a root node device among the multiple designated devices according to the number of accessible devices corresponding to the ports of a designated device(s).

14. The method of claim 13, wherein determining the root node device among the multiple designated devices according to the number of accessible devices corresponding to the ports of the designated device(s), comprises:

calculating, for any designated device of the designated devices, a mean square deviation of the numbers of accessible devices corresponding to all the ports of the designated device for connecting the accessible devices; determining the root node device among the multiple designated devices according to the mean square deviation(s) corresponding to the designated device(s).

15. The method of claim 14, wherein determining the root node device among the multiple designated devices according to the mean square deviation(s) corresponding to the designated device(s), comprises:

in the designated devices whose number of ports for connecting the accessible devices being not 1, taking a designated device with a smallest mean square deviation as the root node device among the multiple designated devices, or determining the root node device among the multiple designated devices according to the mean square deviation(s) corresponding to the designated device(s) and port bandwidth(s) of the designated device(s).

16. An apparatus for generating a network topology, wherein the apparatus comprises:

a first determination module, configured for determining multiple designated devices in a network; wherein the designated devices are directly or indirectly connected through ports; a second determination module, configured for determining, among the multiple designated devices, accessible devices corresponding to the ports of the designated devices, wherein any accessible device corresponding to a port of a designated device is directly or indirectly connected to the designated device through the port; a third determination module, configured for determining a root node device among the multiple designated devices according to the number of accessible devices corresponding to the ports of a designated device(s); a fourth determination module, configured for determining, according to the accessible devices corresponding to the ports of the designated devices, designated devices that are directly connected, among the multiple designated devices; and a generation module, configured for generating a topology of the multiple designated devices in the network according to the root node device and the designated devices that are directly connected among the multiple designated devices.

17. The apparatus of claim 16, wherein the third determination module comprises:

a first calculation sub module, configured for calculating, for any designated device of the designated devices, a mean square deviation of the numbers of accessible devices corresponding to all the ports of the designated device for connecting the accessible devices; and a first determination sub module, configured for determining the root node device among the multiple designated devices according to the mean square deviation(s) corresponding to the designated device(s).

18. The apparatus of claim 17, wherein the first determination sub module is specifically configured for:

in the designated devices whose number of ports for connecting the accessible devices being not 1, taking a designated device with a smallest mean square deviation as the root node device among the multiple designated devices, or determining the root node device among the multiple designated devices according to the mean square deviation(s) corresponding to the designated device(s) and port bandwidth(s) of the designated device(s).

19. The apparatus of claim 16, wherein the fourth determination module comprises:

a second determination sub module, configured for determining types of the ports of the designated devices according to the root node device among the multiple designated devices and the accessible devices corresponding to the ports of the designated devices; wherein the types of the ports comprise uplink ports and downlink ports; a third determination sub module, configured for determining the designated devices that are directly connected among the multiple designated devices according to the types of the ports of the designated devices and the accessible devices corresponding to the ports of the designated devices.

20. The apparatus of claim 19, wherein the third determination sub module comprises:

a determination unit, configured for determining accessible devices corresponding to each uplink port and accessible devices corresponding to each downlink port; an execution unit, configured for, for any two of the multiple designated devices, performing an operation of determining whether a first device and a second device are designated devices directly connected according to the accessible devices corresponding to the uplink port of the first device and the accessible devices corresponding to the downlink port of the second device until all designated devices that are directly connected among the multiple designated devices are determined; wherein the first device and the second device are the any two of the multiple designated devices, when the accessible devices corresponding to the uplink port of the first device comprise the second device, the accessible devices corresponding to the downlink port of the second device comprise the first device, and there is no intersection between the accessible devices corresponding to the uplink port of the first device and the accessible devices corresponding to the downlink port of the second device, determining that the first device and the second device are directly connected.

21. The apparatus of claim 16, wherein the fourth determination module is specifically configured for:

for any two of the multiple designated devices, performing an operation of determining whether a first device and a second device are designated devices that are directly connected according to accessible devices corresponding to a first port of the first device and accessible devices corresponding to a second port of the second device, until all designated devices that are directly connected among the multiple designated devices are determined;
wherein, the first device and the second device are the any two of the multiple designated devices, the first port is any port of the first device, and the second port is any port of the second device.

22. The apparatus of claim 21, wherein the first port is an uplink port, the second port is a downlink port, accessible devices of the uplink port comprise the root node device, and accessible devices of the downlink port do not comprise the root node device.

23. The apparatus of claim 22, wherein the fourth determination module is further configured for:
when the accessible devices corresponding to the uplink port of the first device comprise the second device, the accessible devices corresponding to the downlink port of the second device comprise the first device, and there is no intersection between the accessible devices corresponding to the uplink port of the first device and the accessible devices corresponding to the downlink port of the second device, determining that the first device and the second device are directly connected.

24. The apparatus of any of claims 16-23, wherein the generation module comprises:

a fourth determination sub module, configured for determining levels corresponding to the multiple designated devices according to the root node device and the designated devices that are directly connected among the multiple designated devices;
a generation sub module, configured for generating the topology of multiple designated devices in the network according to the levels corresponding to the multiple designated devices.

25. The apparatus of claim 24, wherein the generation sub module is configured for:

setting a horizontal distance between adjacent designated devices of each of the levels and ordinates of respective designated devices in each of the levels; wherein abscissae of the respective designated devices in the same level are different, and the ordinates of the respective designated devices in the same level are the same;
for each of the levels in sequence, if this level is a first level, calculating an abscissa of the root node device in the first level as a candidate abscissa according to the number of designated devices in a next level of the first level and a horizontal distance between adjacent designated devices in the next level of the first level, wherein the first level is a level where the root node device is located;
if this level is not the first level and has a next level, calculating abscissae of respective designated devices in this level as candidate abscissae according to the number of designated devices in the next level of this level and a horizontal distance between adjacent designated devices in the next level of the level, and adjusting candidate abscissae of respective designated devices in a level above this level according to the candidate abscissae of the respective designated devices in this level; when this level is a penultimate level, after adjusting the candidate abscissae of respective designated devices in the level above this level, taking the candidate abscissae of respective designated devices in each of the levels other than a last level as target abscissae, wherein the last level is a level which does not have a next level;
if this level is the last level, determining target abscissae of respective designated devices in the last level according to a horizontal distance between adjacent devices in the last level;
generating the topology of the multiple designated devices in the network according to the target abscissae and ordinates of respective designated devices in respective levels.

26. The apparatus of claim 16, wherein the apparatus further comprises:

an eighth determination module, configured for determining a device to be hidden in the topology after receiving a network contraction instruction;
a ninth determination module, configured for re-determining multiple designated devices in the network based on the device to be hidden, wherein the designated devices do not comprise the device to be hidden, and returning to trigger the generation module.

27. The apparatus of claim 26, wherein the apparatus further comprises:

a tenth determination module, configured for determining a device to be deployed in the topology after receiving a network deployment instruction;
an eleventh determination module, configured for re-determining multiple designated devices in the network based on the device to be deployed, wherein the designated devices comprise the device to be deployed; and returning to trigger the generation module.

28. An apparatus for determining a root node device, comprising:

a fifth determination module, configured for determining multiple designated devices in a network; wherein the multiple designated devices are directly or indirectly connected through ports;
a sixth determination module, configured for determining, among the multiple designated devices, accessible devices corresponding to the ports of the designated devices, wherein any accessible device corresponding to a port of a designated device is directly or indirectly connected to the designated device through the port; and
a seventh determination module, configured for determining a root node device among the multiple designated devices according to the number of accessible devices corresponding to the ports of a designated device(s).

29. The apparatus of claim 28, wherein the seventh determination module comprises:

a second calculation sub module, configured for calculating, for any designated device of the designated devices, a mean square deviation of the numbers of accessible devices corresponding to all the ports of the designated device for connecting the accessible devices;
a fifth determination sub module, configured for determining the root node device among the multiple designated devices according to the mean square deviation(s) corresponding to the designated device(s).

30. The apparatus of claim 29, wherein the fifth determination sub module is specifically configured for:

in the designated devices whose number of ports for connecting the accessible devices being not 1, taking a designated device with a smallest mean square deviation as the root node device among the multiple designated devices, or
determining the root node device among the multiple designated devices according to the mean square deviation(s) corresponding to the designated device(s) and port bandwidth(s) of the designated device(s).

31. An electronic device, comprising a memory and a processor; wherein the memory stores a computer program executable by the processor, which when executed by the processor, causes the processor to implement the method for generating a network topology of any of claims 1-12, or the method for determining a root node device of any of claims 13-15.

32. A non-transitory computer-readable storage medium, wherein a computer program is stored thereon, and when executed by a processor, causes the processor to implement the method for generating a network topology of any of claims 1-12 or the method for determining a root node device of any of claims 13-15.

33. A computer program code, wherein the computer program code is configured to be executed to perform the method for generating a network topology of any of claims 1-12 or the method for determining a root node device of any of claims 13-15.

tree-type network structure

root node A

downlink port    downlink port

uplink port    uplink port

first level node B                    first level node C

downlink port    downlink port        downlink port    downlink port

uplink port    uplink port        uplink port    uplink port

second level node D    second level node E        second level node F    second level node G

FIG. 1

Step S101
determining multiple designated devices in a network

Step S102
determining, among the multiple designated devices, accessible devices corresponding to the ports of the designated devices

Step S103
determining a root node device among the multiple designated devices according to the number of accessible devices corresponding to the ports of the designated devices

Step S104
determining, according to the accessible devices corresponding to the ports of the designated devices, designated devices that are directly connected, among the multiple designated devices

Step S105
generating a topology of the multiple designated devices in the network according to the root node device and the designated devices that are directly connected among the multiple designated devices

FIG. 2

```
"SwitchTopologyList":[{
    "SwitchTopology":{
        "id":,/*optional, integer, port number*/
        "PortMacList":[{
            "PortMac":{
                "mac":"",/*optional, string, mac address*/
                "seq":""/*optional, string, device serial number*/
            }
        }]
    }/*optional, topology record information*/
```

FIG. 3

FIG. 4

FIG. 5a

FIG. 5b

node device

switch device

switch device

switch device  switch device  IPC

IPC  IPC  IPC  IPC  IPC

FIG. 6

Step S201

| determining multiple designated devices in the network |
| --- |

Step S202

| determining, among the multiple designated devices, accessible devices corresponding to the ports of the designated devices |
| --- |

Step S203

| determining a root node device among the multiple designated devices according to the number of accessible devices corresponding to the ports of the designated devices |
| --- |

FIG. 7

first determination
module — 310

second determination
module — 320

third determination
module — 330

fourth determination
module — 340

generation module — 350

FIG. 8

fifth determination
module — 410

sixth determination
module — 420

seventh determination
module — 430

FIG. 9

## INTERNATIONAL SEARCH REPORT

| International application No. |
| --- |
| **PCT/CN2021/082402** |

| A. | CLASSIFICATION OF SUBJECT MATTER |
| --- | --- |

H04L 12/751(2013.01)i; H04L 12/44(2006.01)i

According to International Patent Classification (IPC) or to both national classification and IPC

| B. | FIELDS SEARCHED |
| --- | --- |

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 网络, 拓扑, 生成, 直接, 间接, 连接, 端口, 数量, 根节点, 均方差, network, topology, generate, direct, indirect, connect, port, number, root node, mean square error

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 111464450 A (HANGZHOU HIKVISION DIGITAL TECHNOLOGY CO., LTD.) 28 July 2020 (2020-07-28) <br> claims 1-15, description paragraphs [0001]-[0155] | 1-33 |
| Y | CN 105554888 A (ELECTRIC POWER RESEARCH INSTITUTE OF SICHUAN ELECTRIC POWER CORPORATION; STATE GRID CORPORATION OF CHINA et al.) 04 May 2016 (2016-05-04) <br> description paragraphs [0008]-[0143] | 1-33 |
| Y | CN 106452827 A (HANGZHOU YOUYUN SOFTWARE CO., LTD.) 22 February 2017 (2017-02-22) <br> description, paragraphs [0004]-[0059] | 1-33 |
| A | US 2014219078 A1 (CISCO TECH. INC.) 07 August 2014 (2014-08-07) <br> entire document | 1-33 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 May 2021** | **22 June 2021** |

| Name and mailing address of the ISA/CN | Authorized officer |
| --- | --- |
| China National Intellectual Property Administration (ISA/CN) <br> No. 6, Xitucheng Road, Jimenqiao, Haidian District, Beijing 100088 <br> China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/082402**

| Patent document cited in search report | | | Publication date (day/month/year) | Patent family member(s) | | | Publication date (day/month/year) |
|---|---|---|---|---|---|---|---|
| CN | 111464450 | A | 28 July 2020 | None | | | |
| CN | 105554888 | A | 04 May 2016 | CN | 105554888 | B | 16 April 2019 |
| CN | 106452827 | A | 22 February 2017 | None | | | |
| US | 2014219078 | A1 | 07 August 2014 | US | 9544220 | B2 | 10 January 2017 |

Form PCT/ISA/210 (patent family annex) (January 2015)

**EP 4 131 871 A1**

**REFERENCES CITED IN THE DESCRIPTION**

**Patent documents cited in the description**

- CN 202010230987